# EUROPEAN PATENT APPLICATION

(11) **EP 2 743 022 A1**
(43) Date of publication of application: **18.06.2014**
(21) Application number: 13197476.8
(22) Date of filing: 16.12.2013
(51) Int. Cl.: B23D 45/10, B27B 5/075

(54) **Cutting unit and panel saw machine comprising the cutting unit**

(30) Priority: 17.12.2012 IT BO20120677
(71) Applicant: GIBEN INTERNATIONAL S.p.A., 40065 Pianoro (Bologna) (IT)
(72) Inventor: Benuzzi, Piergiorgio, 40141 BOLOGNA (IT)
(74) Representative: Lanzoni, Luciano

(57) **Abstract**

A cutting unit (5) for a panel saw machine (1), comprises a carriage (8), a first circular saw (17) mounted on the carriage (8) and movable between a rest position and a cutting position, a second circular saw (18) mounted on the carriage (8) and movable between a rest position and a cutting position, a system (21, 22, 27, 28) for driving the first and second circular saws (17, 18) and mounted on the carriage (8); the cutting unit (5) comprises a positioning unit (9) connected to the carriage (8) rotatably about an axis of rotation (R) and comprising the first circular saw (17), the second circular saw (18) and the system (21, 22, 27, 28) for driving the saws (17, 18).

## Description

This invention relates to a cutting unit for a panel saw machine for cutting panels of wood and the like and the panel saw machine comprising the cutting unit.

Panel saw machines of known type are used to cut panels of various sizes, usually placed on top of each other in stacks of predetermined height.

These panel saw machines essentially comprise a horizontal work table to support the stacks of panels to be cut; a panel movement unit or pusher, movable along a horizontal direction X, for moving the panels along the work table; and a rotary blade cutting device or unit for cutting the panel or the stack of panels along a cutting direction Y defining a cutting line transversal to the direction X.

Depending on the height of the stack of panels to be cut, that is to say, depending substantially on the type of machine, the cutting unit may comprise a main cutting tool blade and a secondary blade, known as scoring tool, which is smaller in diameter than the main blade and which prepares the panels for the operation of the main tool.

The cutting unit moves along the cutting line between a first end position and a second end position.

Under normal conditions of use, the cutting unit performs a forward cutting stroke along the direction Y from the first end position to the second end position and a return stroke from the second position to the first position.

Generally speaking, the main tool and the scoring tool are raised above the panel work table during the forward stroke so as to cut the panels and are lowered below the work table during the return stroke which occurs at a higher speed than the forward stroke because the panels are not cut during the return stroke.

One disadvantage of these prior art solutions is that the return stroke is idle in that the panels cannot be cut. In practice, the return stroke constitutes downtime during machine processes.

In other words, in work cycles performed with prior art cutting units, the cutting unit must necessarily return to the first operating position before cutting the panels again during another forward cutting stroke. This inevitably limits the productivity of the panel saw machine on account of the downtime during the return stroke when the machine is unavailable for cutting.

To overcome this solution, the Applicant developed a twin blade cutting unit, described in patent document IT1180500, equipped with a first and a second circular saw, identical and counter-rotating, each provided with a respective electric motor and both adjustable in height relative to each other in such a way that each alternates, according to the direction of travel, between a lower position where it acts as a scoring tool and an upper position where it acts as a main tool.

One disadvantage of this solution is that it necessitates two heavy, high-power motors for driving the blades.

The cutting unit is therefore bulky and difficult to move.

Moreover, the use of two circular saws of equal diameter makes it difficult to adjust blade height to use the blade at the front, according to the direction of motion, as the scoring tool and the blade at the rear as the main tool.

Height adjustment is a complex and laborious operation, particularly at the end of each stroke, when the blades have to be repositioned for the next stroke.

In effect, the blade used as scoring tool during the forward stroke must be lifted during the return stroke to act as the main tool, whilst the blade used as the main tool during the forward stroke must be lowered during the return stroke to act as the scoring tool.

In this context, the main purpose of this invention is to provide a cutting unit and a corresponding panel saw machine that are free of the above mentioned disadvantages.

One aim of this invention is to provide a cutting unit which allows reducing the downtime involved in performing the work cycles. Another aim of the invention is to provide a panel saw machine which is more efficient than the prior art solutions also in terms of acceleration and speed of the cutting unit.

The stated technical purpose and aims of the invention are substantially achieved by a cutting unit according to claim 1 and a panel saw machine according to claim 9.

Further features and advantages of the invention are more apparent in the approximate and hence non-limiting description of a preferred, non-exclusive embodiment of a panel saw machine, illustrated in the accompanying drawings in which:
- Figure 1 is a schematic plan view from above of a panel saw machine according to this invention;
- Figure 2 illustrates the cutting unit of the panel saw machine of Figure 1 in a schematic front view partly in blocks;
- Figure 3 is a schematic top plan view of the cutting unit of Figure 2;
- Figures 4a-4c are schematic front views illustrating a sequence of working steps in a panel saw machine according to the invention. With reference to the accompanying drawings, the numeral 1 denotes a panel saw machine or panel saw according to this invention.

The panel saw machine 1 is substantially of the known type and the description of it which follows is limited to the parts necessary for understanding the invention.

The panel saw machine 1 is designed to cut panels 2 made of wood or the like and which are preferably placed on top of each other in stacks.

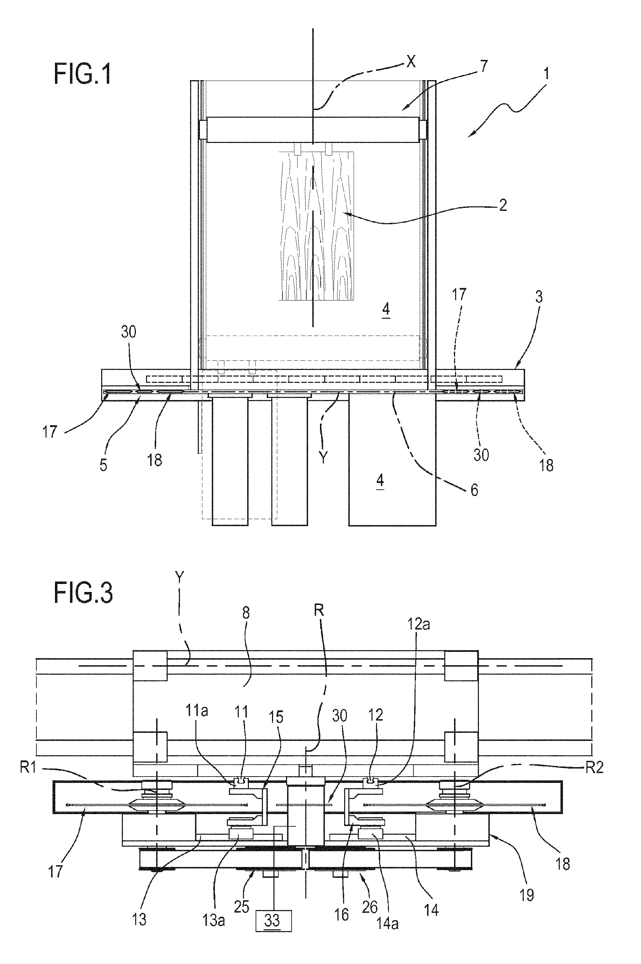

The panel saw comprises a base 3, a work table 4 for supporting the panels 2 and connected to the base 3, a cutting unit 5 which is movable, to cut the panels 2, between a first operating position, drawn with a solid line on the left in Figure 1, and a second operating position, drawn with a dashed line on the right in Figure 1.

The cutting unit 5 is movable along a cutting direction Y to define a cutting line 6.

The panel saw 1 also comprises a panel 2 movement unit 7, not further described, which is movable along a feed direction X for feeding the panels 2 to the cutting line 6.

The directions X and Y are perpendicular to each other, in known manner.

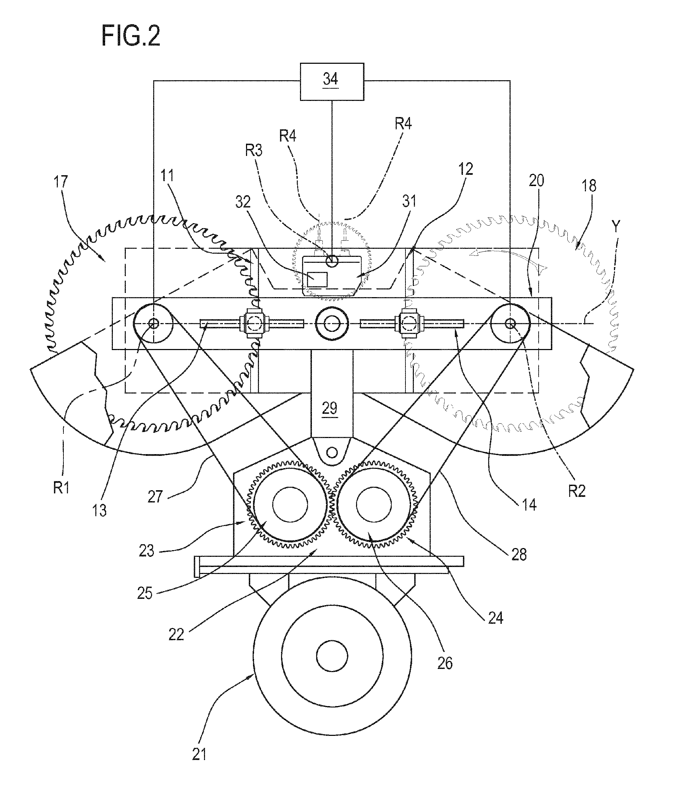

Looking in more detail with reference in particular to Figures 2 to 5, it may be observed that the cutting unit 5 comprises a carriage 8 which is slidably constrained to and supported by the base 3.

The carriage 8 is movable in the direction Y along the cutting line 6. The cutting unit 5 comprises a positioning unit 9 connected to the carriage 8 rotatably about an axis of rotation R

The axis of rotation R is parallel to the feed direction X of the panels 2.

More specifically, the positioning unit 9 is coupled to the carriage 8 by a hinge connection 10 and, preferably, by a guide and shoe system.

In an example embodiment, the guide and shoe system comprises a first guide 11 and a second guide 12 integral with the carriage 8 and extending along a direction Z at right angles to the directions X and Y.

A corresponding shoe 11a and 12a is slidably coupled to each guide 11, 12.

A third guide 13 and a fourth guide 14 are integral with the positioning unit 9 and extend, with reference to the operating configuration illustrated in Figure 3, parallel to the direction Y.

A corresponding shoe 13a and 14a is slidably coupled to each guide 13, 14.

The shoes 13a and 14a are also slidably connected to the shoe 11 a and to the shoe 12a, respectively.

The shoes 13a and 14a are connected to the shoe 11 a and to the shoe 12a, respectively, by respective connecting elements 15, 16. This system of connecting the positioning unit 9 to the carriage 8 gives the positioning unit 9 itself the mobility which is described in more detail below.

The positioning unit 9 comprises a first circular saw 17 and a second circular saw 18.

Preferably, the saws 17 and 18 are the same in diameter and are counter-rotating.

The saws 17 and 18 have respective axes of rotation R1 and R2 parallel to the direction X.

More precisely, the positioning unit 9 comprises a supporting structure 19 which is rotatably connected to the carriage 8 and on which the saws 17 and 18 are installed.

The aforementioned guides 13, 14 are fixed to the structure 19. The saws 17 and 18 are supported by the structure 19.

The structure 19 has a first member 20 which, in a horizontal configuration of the positioning unit 9, extends along the direction Y. The saws 17 and 18 are mounted on the supporting structure 19, in particular on the member 20, on opposite sides of the axis of rotation R of the positioning unit.

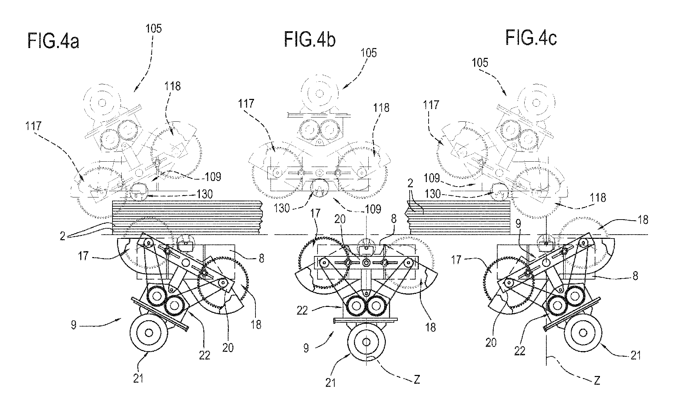

Thus the saw 17 is movable between a rest position, illustrated for example in Figure 4c, and a cutting position, illustrated for example in Figure 4a.

The saw 18 is movable between a rest position, illustrated for example in Figure 4a, and a cutting position, illustrated for example in Figure 4c.

The circular saw 17 is movable from the rest position to the operating position by rotation of the positioning unit 9 in clockwise direction. The circular saw 17 is movable from the respective operating position to the respective rest position by a rotation of the positioning unit 9 in anticlockwise direction.

The circular saw 18 is movable from the rest position to the operating position by rotation of the positioning unit 9 in anticlockwise direction. The circular saw 18 is movable from the respective operating position to the respective rest position by a rotation of the positioning unit 9 in clockwise direction.

In practice, starting from the configuration of Figure 4a, an anticlockwise rotation of the positioning unit 9 brings the saw 17 from the operating position to the rest position and the saw 18 from the rest position to the operating position, as illustrated in Figure 4c. Advantageously, the cutting unit 5 comprises means for driving the blades 17 and 18, installed on the positioning unit 9.

The means for driving the blades 17 and 18 are therefore also supported by the carriage 8 and are movable as one with the positioning unit 9 as the latter rotates.

The drive means comprise an electric motor 21 and a motion transmission system 22 operating between the motor 21 and the saws 17 and 18.

The motion transmission system 22 comprises motion reversing means to impart to the first circular saw 17 a clockwise direction of rotation and to the second saw 18 an anticlockwise direction of rotation.

In the example illustrated, the motion reversing means comprise a first toothed wheel 23 driven by the motor 21 and a toothed wheel 24 meshed with the first wheel 23.

The toothed wheels 23 and 24 have parallel axes and are connected to respective pulleys 25, 26 which drive the saws 17 and 18 with a belt 27 and a belt 28, respectively.

More specifically, with reference in particular to Figure 2, it may be observed that the positioning unit 9 comprises a bracket 29 which projects from the member 20 and which supports the motor 21 and the transmission system 22.

The cutting unit 5 comprises scoring means for the panels 2, mounted on the carriage 8 and movable between a non-operating position clear of the panels 2 on the work table 4, illustrated for example in Figures 2 and 4b, and an operating position, illustrated for example in Figures 4a and 4c, in contact with the panels 2 being worked.

The scoring means comprise a scoring tool 30 and an arm 31 for supporting the scoring tool 30.

In a first preferred embodiment, the scoring tool 30 is a circular saw, preferably smaller in diameter than the saws 17 and 18, and having an axis of rotation R3 parallel to the axes of rotation R1 and R2 of the saws 17 and 18.

Alternatively, as illustrated by the dashed line, the scoring tool might be a finger bit.

Finger bits have an axis of rotation R4 which is transversal to the axes of rotation R1 and R2 of the saws 17 and 18.

The scoring means also comprise a motor system, of substantially known type and schematically represented as a block 32, for driving the scoring tool 30.

In practice, the scoring means, in particular the scoring tool 30, are supported by the carriage 8 and are movable between a position close to the carriage 8 and a position away from the carriage.

The scoring means, in particular the scoring tool 30, are movable along a lifting axis parallel to the direction Z.

The lifting axis intersects the axis of rotation R of the positioning unit 9.

As illustrated, looking at Figure 2, the scoring tool 30 is positioned between the blades 17 and 18.

Figures 4a to 4c show how, in use, the cutting unit 5 allows the panels 2 to be cut both during a forward stroke, for example from left to right looking at these figures, and during a return stroke, from right to left.

During the forward stroke, the blade 17 is at the operating position and follows the scoring tool 30 which prepares the panels 2 for the cutting action of the selfsame blade 17.

At the end of the forward stroke, the positioning unit 9 rotates anticlockwise in such a way as to bring the blade 17 to the respective non-operating position and to simultaneously lift the second blade 18 to its operating position for cutting. In this configuration, after the panels 2 have been fed along the work table 4 by the movement unit 7 in known manner, the cutting unit 5 performs the return stroke, which is also a cutting stroke and no longer an idle stroke.

Advantageously, the blades 17 and 18 rotate in opposite directions, thanks to the presence of the motion reversing means, in such a way that the panels 2 being worked are effectively cut.

During the forward stroke, the blade 17 is positioned downstream of the scoring tool 30, whereas the blade 18 is positioned downstream of the scoring tool 30 during the return stroke.

It should be noticed that the scoring tool 30 makes a substantially tangential, shallow cut on the panel 2 and can therefore be used with the same direction of rotation in both the forward and the return stroke. For example, generally speaking, a scoring tool 200 mm in diameter makes a cut approximately 2 mm deep in the panel.

During non-operating transitional steps, as for example those shown in Figures 2 and 4b, none of the blades 17, 18, 30 is lifted and the cutting unit 5 can be moved safely along the cutting line 6.

The cutting unit 5 comprises a movement system, schematically represented as a block 33, by which the positioning unit 9 is turned about the axis R.

The system 33 is configured and driven by a remote computerized control unit, not illustrated, for making the positioning unit 9 perform the movements described above.

In practice, the cutting unit 5 according to the invention makes it possible to overcome the disadvantages of the prior art because, thanks to the swinging positioning unit comprising both the blades 17, 18 and the single motor 21 for driving both of them, it is lighter and less cumbersome than the prior art solutions and allows cutting to be performed during both the forward and return strokes. Advantageously, the cutting unit 5 comprises a system, schematically represented as a block 34 in Figure 2, for adjusting the axial position of the cutting blades 17, 18 and of the scoring tool 30, in such a way that they are always co-planar and so that the measurements of the cut panels are always those required, irrespective of whether the panels are cut by the blade 17 or by the blade 18.

In other words, the blades 17, 18 - and also the scoring tool 30 - are movable relative to each other axially to guarantee uniformity of cutting.

In a preferred embodiment partly illustrated in dashed lines in Figures 4a-4c, the panel saw 1 comprises a second cutting unit 105, identical to the cutting unit 5, for cutting the panels 2.

The cutting unit 105 is positioned on the side opposite the cutting unit 5 with respect to the work table 4 which supports the panels 2 in order to cut the stack of panels 2 on the side opposite the one cut by the cutting unit 5, and the description of it is limited to the part necessary for understanding this embodiment of the panel saw, it being also understood that the features not described are the same as those of the cutting unit 5.

The cutting unit 105 is coordinated with the cutting unit 5.

The cutting unit 105 comprises a blade 117, a blade 118 and a scoring tool 130.

The cutting unit 105 is driven in such a way that the blade 117 acts on the panels at substantially the same time as the blade 17 and the blade 118 acts on the panels at the same time as the blade 18.

The cutting unit 105 comprises a positioning unit 109 identical to the positioning unit 9 and the blades 117 and 118 are driven in the same way as the blades 17 and 18.

Thus, panel processing times are considerably reduced compared to those of prior art solutions since one pair of blades 17, 117 cuts the stack of panels during a forward stroke of the carriages 5 and 105 and another pair of blades 18, 118 cuts the stack of panels during a return stroke.

## Claims

1. A cutting unit for a panel saw machine (1), comprising:
a carriage (8)
a first circular saw (17) mounted on the carriage (8) and movable between a rest position and a cutting position
a second circular saw (18) mounted on the carriage (8) and movable between a rest position and a cutting position, the first and second circular saws (17, 18) having, respectively, a first axis of rotation (R1) and a second axis of rotation (R2) which are parallel to each other
means (21, 22, 27, 28) for driving the first and second circular saws (17, 18) and mounted on the carriage (8)
the cutting unit being **characterized in that** it comprises a positioning unit (9) connected to the carriage (8) rotatably about an axis of rotation (R) the positioning unit (9) comprising the first circular saw (17), the second circular saw (18) and the drive means (21, 22, 27, 28),
the first circular saw (17) being movable from the respective rest position to the respective operating position by a first rotation of the positioning unit (9) and being movable from the respective operating position to the respective rest position by a second rotation of the positioning unit (9) in the opposite direction to the first rotation,
the second circular saw (18) being movable from the respective rest position to the respective operating position by the second rotation of the positioning unit (9) and being movable from the respective operating position to the respective rest position by the first rotation of the positioning unit (9).

2. The cutting unit according to claim 1, **characterized in that** the first and second circular saws (17, 18) are mounted on the positioning unit (9) on opposite sides of the axis of rotation (R).

3. The cutting unit according to claim 1 or 2, **characterized in that** it comprises scoring means (30, 31, 32) mounted on the carriage (8), movable between a position close to the carriage (8) and a position away from the carriage (8) and positioned between the first and second circular saws (17, 18).

4. The cutting unit according to claim 3, **characterized in that** the scoring means (30, 31, 32) are movable along a lifting axis intersecting the axis of rotation (R) between a non-operating positing and a scoring operating position.

5. The cutting unit according to claim 4, **characterized in that** the scoring means (30, 31, 32) comprise a third circular saw (30) having a third axis of rotation (R3) parallel to the first and second axes of rotation (R1, R2).

6. The cutting unit according to claim 4, **characterized in that** the scoring means (30, 31, 32) comprise at least one fluted mill having an axis of rotation (R4) transversal to the first and second axes of rotation (R1, R2).

7. A cutting unit according to any of the preceding claims, **characterized in that** the drive means (21, 22, 27, 28) comprise an electric motor (21) and a motion transmission system (22) operating between the electric motor (21) and the first and second circular saws (17, 18).

8. The cutting unit according to claim 7, **characterized in that** the motion transmission system (22) comprises motion reversing means (23, 24) for imparting to the first circular saw (17) a first direction of rotation and for imparting to the second circular saw (18) a second direction of rotation opposite to the first direction of rotation.

9. A panel saw machine for panels (2) comprising a work table (4) for supporting the panels (2), a cutting unit (5) which is movable, in order to cut the panels (2), between a first operating position and a second operating position along a cutting direction (Y), a panel (2) movement unit (7) which is movable along a feed direction (X) for feeding the panels (2) to the cutting unit (5), the panel saw machine being **characterized in that** the cutting unit (5) is made according to any of the preceding claims.

10. The panel saw machine according to claim 9, **characterized in that** it comprises a second cutting unit (105) for cutting the panels (2) made according to any of the claims from 1 to 8, movable between a first operating position and a second operating position along the cutting direction (Y) and positioned on the side opposite to the first cutting unit (5) with respect to the work table (4) in order to cut the panels (2) on the opposite side with respect to the side cut by the first cutting unit (5).
